# EUROPEAN PATENT SPECIFICATION

(11) **EP 2 284 925 B1**
(45) Date of publication and mention of the grant of the patent: **09.05.2012**
(21) Application number: 10172353.4
(22) Date of filing: 10.08.2010
(51) Int. Cl.: H01M 2/02

(54) **Battery pack and method of manufacturing the same**
Batteriepack und Herstellungsverfahren dafür
Bloc-batteries et procédé de fabrication de celui-ci

(30) Priority: 11.08.2009 US 232922 P; 17.02.2010 US 706859
(43) Date of publication of application: 16.02.2011
(73) Proprietor: Samsung SDI Co., Ltd., Gyeonggi-do (KR)
(72) Inventor: Baek, Woonseong, Gyeonggi-do (KR); Lee, Sangjoo, Gyeonggi-do (KR)
(74) Representative: Gulde Hengelhaupt Ziebig & Schneider

(56) References cited:
- JP-A- 2006 278 333
- US-A1- 2004 091 769
- US-A1- 2005 118 501

## Description

### BACKGROUND OF THE INVENTION

### 1. Field of the Invention

The present invention relates to a battery pack and a method of manufacturing the same.

### 2. Description of the Related Art

Lithium ion secondary batteries may be manufactured in a battery pack configuration. A battery pack may include a bare cell, a circuit module, and an external cover. The bare cell may include an electrode assembly including a positive electrode plate, a negative electrode plate, and a separator disposed therebetween; a can or a pouch in which the electrode assembly is disposed; and a cap assembly to seal an opening of the can or pouch. The circuit module may include a circuit device, such as a charge/discharge device and/or a protective circuit device, and the circuit module may be coupled to the bare cell. The external cover may cover the circuit module.

Generally, battery packs deteriorate in quality because the coupling of components weakens or fails due to external impacts. Thus, battery packs with structures having improved durability against external impacts are desired. Further, improved work efficiency in manufacturing processes and a reduced number of manufacturing processes are desired.

JP 2006 278333 discloses a prismatic battery pack comprising: (i) a pouch type bare cell; and (ii) a sleeve-type casing being integrally formed and surrounding the side faces of the bare cell. It further discloses a top cover including a circuit module, wherein said top cover is bonded to the upper body part of said sleeve-type casing.

KR1020070042032, discloses a battery pack comprising a tube-type case and top and bottom covers. All these parts are assembled, and hold together by means of an external adhesive film covering the whole tube-type case and the lateral parts of the top and bottom covers.

### SUMMARY OF THE INVENTION

Embodiments are directed to a battery pack, which can improve durability against external impacts and increase efficiency in a manufacturing process and reduce the number of manufacturing processes, and a method of manufacturing the same.

According to one aspect of the invention, there is provided a battery pack, comprising a bare cell having an elongated shape with a top surface, side surfaces and a bottom surface; and a tube-type case being integrally formed and surrounding the side surfaces of the bare cell.

The tube-type case may be made of a heat-shrinkable and/or an insulation material. In particular, the tube-type case may be formed of at least one polymer selected from the group consisting of polycarbonate (PC), polypropylene (PP), polyethylene (PE) and polyethylene terephthalate (PET).

The tube-type case comprises an upper bonding portion extending from a body part of the tube-type case and the battery pack further includes a circuit module disposed on the top surface of the bare cell and a top cover for receiving the circuit module in an inner space thereof, wherein the top cover is formed to at least in parts couple with the upper bonding portion of the tube-type case. The upper bonding portion includes a bonding film disposed on a surface contacting the top cover.

Preferably, the tube-type case further comprises a lower bonding portion extending from the body part of the tube-type case and the battery pack further includes a bottom cover disposed beneath the bottom surface of the bare cell and formed to at least in parts couple with the lower bonding portion of the tube-type case. The lower bonding portion may include a bonding film disposed on a surface contacting the bottom cover.

The top cover and/or the bottom cover may be made of a polyamide based resin.

The tube-type case preferably includes a bonding film disposed on a surface contacting the bare cell.

The bare cell maybe a pouch-type bare cell.

A bond or resin maybe filled in spaces between the tube-type case, the bare cell, the top cover and/or the bottom cover.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1A illustrates a perspective view of a battery pack according to an embodiment;
FIG. 1B illustrates an exploded perspective view of the battery pack of FIG. 1A;
FIG. 1C illustrates a perspective view of a lower portion of a circuit module of the battery pack of FIG. 1B;
FIG. 1D illustrates a sectional view of an upper bonding portion of FIG. 1B;
FIG. 1E illustrates a sectional view of a lower bonding portion of FIG. 1B;
FIG. 2 illustrates a perspective view of a battery pack according to another embodiment;
FIG. 3 illustrates a flowchart of a manufacturing process of a battery pack according to an embodiment;
FIG. 4A illustrates a perspective view of a preparation process of a bare cell of FIG. 3;
FIG. 4B illustrates a perspective view of a coupling process of a tube-type case of FIG. 3;
FIG. 4C illustrates a perspective view of a coupling process of a cover of FIG. 3;
FIG. 4D illustrates a perspective view of an attachment process of a label of FIG. 3;
FIG. 5 illustrates a flowchart of a manufacturing process of a battery pack according to another embodiment; and
FIG. 6 illustrates a perspective view of a coupling process of a cover of FIG. 5.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures. It will be understood that when an element, such as a layer, film, region, or substrate, is referred to as being "formed on" or "disposed on" another element, it can be disposed directly on the other element, or intervening elements may also be present. In contrast, when an element is referred to as being "formed directly on" or "disposed directly on" another element, there are no intervening elements present. Further, it will be understood that when an element is referred to as being "coupled" or "connected" to another element, it can be coupled or connected directly to the other element, or intervening elements may also be present. In contrast, when an element is referred to as being "coupled directly" or "connected directly" to another element, there are no intervening elements present. And, "coupled" and "connected" may refer to both physical and/or electrical coupling or connection.

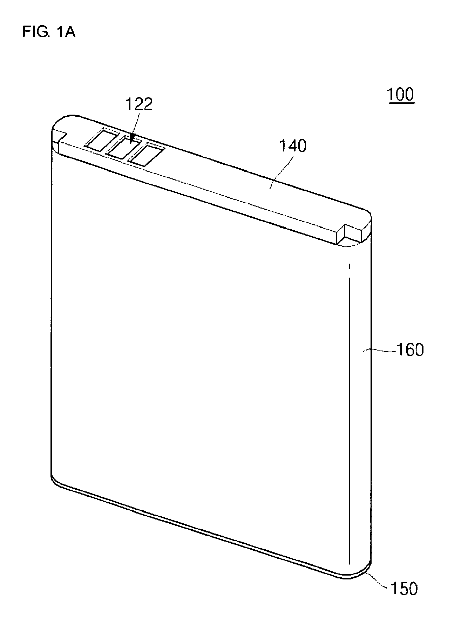

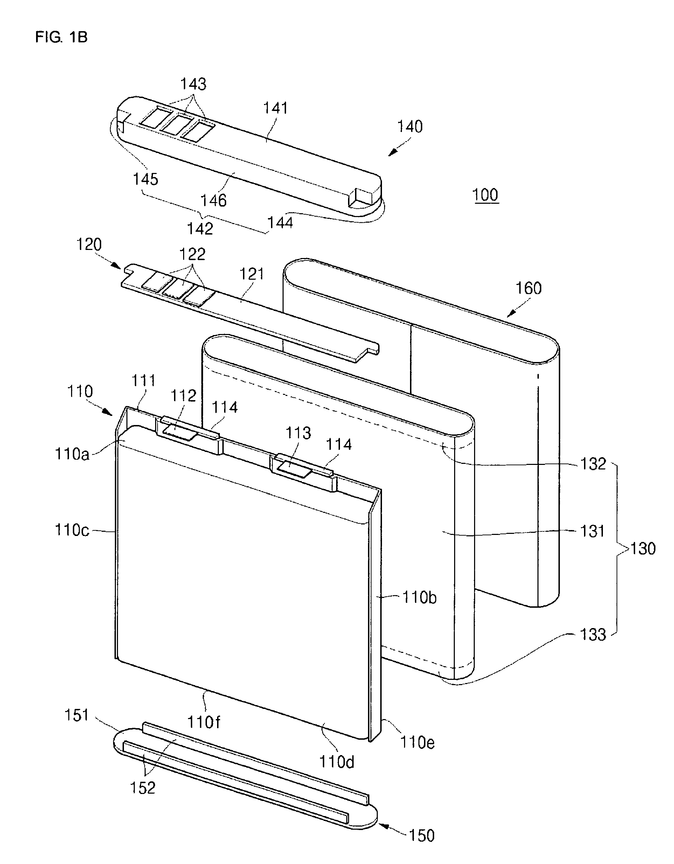

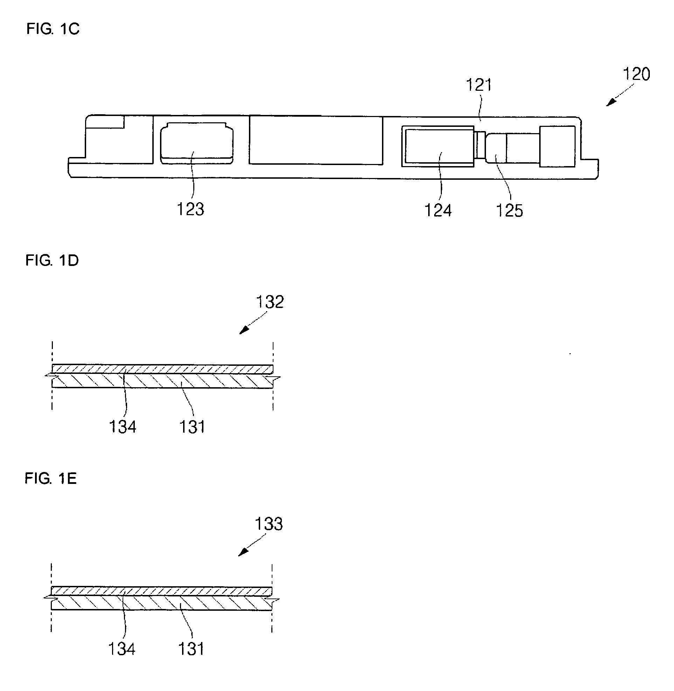

FIG. 1A illustrates a perspective view of a battery pack according to an embodiment; FIG. 1B illustrates an exploded perspective view of the battery pack of FIG. 1A; and FIG. 1C illustrates a perspective view of a lower portion of a circuit module of the battery pack of FIG. 1B. FIG. 1D illustrates a sectional view of an upper bonding portion of FIG. 1B; and FIG. 1E illustrates a sectional view of a lower bonding portion of FIG. 1B.

Referring to FIGS. 1A to 1E, a battery pack 100 according to the shown embodiment includes a bare cell 110, a circuit module 120, a tube-type case 130, a top cover 140, a bottom cover 150, and a label 160. The bare cell 110 generates electrical energy and may be classified as a can-type bare cell or a pouch-type bare cell. Herein, as an example, the pouch-type bare cell will be described.

The shown bare cell 110 includes an electrode assembly (not shown), electrode tabs 112 and 113, and a pouch-type case 111. The electrode assembly includes a positive electrode, a negative electrode, and a separator disposed therebetween. The electrode tabs 112 and 113 are respectively connected to the positive electrode and the negative electrode of the electrode assembly. The pouch-type case 111 receives the electrode assembly such that the electrode tabs 112 and 113 extend from the positive and negative electrodes to an outside of the pouch-type case 111. While not required in all aspects, insulating tapes 114 are disposed on portions of the electrode tabs 112 and 113 to prevent the electrode tabs 112 and 113 from electrically short-circuiting due to contact with the pouch-type case 111.

As shown in FIG. 1B, the bare cell 110 has a top surface 110a, a pair of short side surfaces 110b and 110c, a pair of long side surfaces 110d and 110e, and a bottom surface 110f (i.e., external surfaces of the bare cell 110). The circuit module 120 may be disposed on or adjacent to the top surface 110a. The pair of short side surfaces 110b and 110c and the pair of long side surfaces 110d and 110e are connected to the top surface 110a. The bottom surface 110f is connected to the side surfaces 110b, 110c, 110d, and 110e and is disposed opposite to the top surface 110a. Here, the pair of short side surfaces 110b and 110c denotes side surfaces having a relatively narrow width among the side surfaces 11 0b, 110c, 110d, and 110e connected to the top surface 110a of the bare cell 110. The pair of long side surfaces 110d and 110e denotes side surfaces having a relatively wide width among the side surfaces 110b, 110c, 110d, and 110e of the bare cell 110. The bare cell 110 is electrically connected to the circuit module 120 through the electrode tabs 112 and 113 to form a core pack.

The circuit module 120 is disposed on or adjacent to the top surface 110a of the bare cell 110 and electrically connected to the bare cell 110 to control the charging and discharging of the bare cell 110. The shown circuit module 120 includes a circuit board 121, an external terminal 122, connection terminals 123 and 124, and a positive temperature coefficient (PTC) device 125.

The circuit board 121 may be a plate formed of a resin, but aspects of the present invention are not limited thereto. The circuit board 121 may include a circuit (not shown) to control the charging and discharging of the bare cell 110 or a protective circuit (not shown), such as a circuit to prevent the bare cell 110 from being overdischarged and overcharged. The circuit board 121 may include a circuit device configured to create both a charge/discharge circuit (not shown) and the protective circuit (not shown). The circuit device may be disposed on a bottom surface of the circuit board 121 facing the top surface 110a. The external terminal 122 is disposed on a top surface of the circuit board 121 to electrically connect the circuit board 121 to an external electric device (not shown).

The connection terminals 123 and 124 are disposed on a bottom surface of the circuit board 121. The connection terminals 123 and 124 are electrically connected to the electrode tabs 112 and 113 of the bare cell 110, such as by welding. Here, the connection terminal 123 and the electrode tab 112 may be electrically connected to a positive interconnection pattern (not shown) of the circuit module 120, and the connection terminal 124 and the electrode tab 113 may be electrically connected to a negative interconnection pattern (not shown) of the circuit module 120.

The positive temperature coefficient (PTC) device 125 is electrically connected to one of the connection terminals 123 and 124 to interrupt flow of current when overcurrent or overvoltage generates heat by flowing into the battery pack 100, thereby exceeding a set temperature. Therefore, the PCT device 125 may prevent the battery pack 100 from exploding due to overheating. As shown, the PTC device 125 is connected to the terminal 124, but aspects of the present invention are not limited thereto.

The tube-type case 130 surrounds the bare cell 110 and reinforces the strength of the pouch-type case 111, which generally does not sufficiently protect the bare cell 110 against external impacts. The tube-type case 130 is integrated in a tube shape (i.e., the tube-type case 130 may be formed of as one piece having no seams). The tube-type case 130 may have a hollow, elongated, compressed cylinder shape as shown in the FIGS. The tube-type case 130 is disposed about the side surfaces 110b, 110c, 110d, and 110e of the bare cell 110. Thus, the tube-type case 130 may allow the bare cell 110, the top cover 140, and the bottom cover 150 to be easily coupled together. Also, the bare cell 110 may be easily inserted into the tube-type case 130 to improve work efficiency in a manufacturing process for coupling the bare cell 110 to the tube-type case 130. Further, the tube-type case 130 allows for the top cover 140 and the bottom cover 150 to be insert injection molded while the bare cell 110 is disposed in the tube-type case 130.

The tube-type case 130 may be formed of an electrically insulating and/or heat-shrinkable material. Examples include a material selected from the group consisting of polycarbonate (PC), polypropylene (PP), polyethylene (PE), polyethylene terephthalate (PET), and combinations thereof. Thus, the tube-type case 130 may closely adhere to the bare cell 110 after the application of heat when the bare cell 110 is coupled to the top cover 140 and the bottom cover 150. Further, the tube-tube case 130 may reduce the weight of the battery pack 100.

The tube-type case 130 may have a thickness of about 0.1 mm to about 0.3 mm. Here, when the tube-type case 130 has a thickness less than about 0.1 mm, it is difficult to perform an injection molding process. When the tube-type case 130 has a thickness greater than about 0.3 mm, the overall thickness of the battery pack is increased, which is not desirable for other reasons. However, it is understood that greater thicknesses can be used in other applications according to aspects of the invention.

The tube-type case 130 may include a body portion 131 that surrounds or is disposed to cover the side surfaces 110b, 110c, 110d, and 110e of the bare cell 110. The tube-type case 130 also includes an upper bonding portion 132 that extends from the body portion 131 in a direction toward the top cover 140. And, the tube-type case 130 may include a lower bonding portion 133 that extends from the body portion 131 in a direction toward the bottom cover 150. Referring to FIG. 1D, the upper bonding portion 132 includes a bonding film 134 disposed on a surface of the upper bonding portion 132 that contacts the top cover 140 so as to bond the tube-type case 130 to the top cover 140. Referring to FIG. 1E, the lower bonding portion 133 may include a bonding film 134 disposed on a surface of the lower bonding portion 133 that contacts the bottom cover 150 so as to bond the tube-type case 130 to the bottom cover 150. Although not shown, a bonding film may be disposed on a surface of the body portion 131 that contacts the bare cell 110. A bond or resin may be disposed to fill spaces between the tube-type case 130, the bare cell 110, the top cover 140, and the bottom cover 150 to improve coupling between components, however such bond or resin is not required in all aspects.

The top cover 140 may be formed by a separate injection molding process and then coupled to the bare cell 110 and the upper bonding portion 132 of the tube-type case 130. The top cover 140 covers the circuit module 120 in an inner space of the top cover 140. The top cover 140 includes a cover plate 141 and a sidewall 142 extending from the cover plate 141 in a direction toward the circuit module 120.

While not required in all aspects, the shown cover plate 141 has a shape approximately similar to that of the circuit board 121. An inner surface of the cover plate 141 contacts a top surface of the circuit board 121. The cover plate 141 has a through hole 143 defined in a region of the cover plate 141 corresponding to the external terminal 122. The through hole 143 exposes the external terminal 122 to electrically connect the battery pack 100 to an external electric device (not shown). As shown, the through hole 143 comprises multiple holes, each hole corresponding to one of the terminals 122. However, aspects of the invention are not limited to equal numbers of holes and terminals.

The sidewall 142 may include end parts 144 and 145 disposed on both ends of a longitudinal direction of the top cover 140 and at least one connection part 146 connecting the end part 144 to the end part 145. Here, a lower region of the sidewall 142, i.e., lower regions of both end parts 144 and 145 and the connection part 146 may be inserted into an upper portion of the tube-type case 130 and contact the upper bonding portion 132. Thus, the lower regions of both end parts 144 and 145 and the connection part 146 are coupled to the tube-type case 130, such as by thermal bonding.

The bottom cover 150 may be formed by a separate injection molding process. The bottom cover 150 covers the bottom surface 110f of the bare cell 110 and is coupled to the lower bonding portion 133 of the tube-type case 130. The bottom cover 150 includes a bottom plate 151 and at least one extension part 152 extending from the bottom plate 151 toward the bare cell 110.

While not required in all aspects, the shown bottom plate 151 has a shape similar to that of the bottom surface 110f of the bare cell 110, and the bottom plate 151 contacts the bottom surface 110f of the bare cell 110. The extension part 152 covers lower portions of the long side surfaces 110d and 110e of the bare cell 110. The extension part 152 is inserted into a lower portion of the tube-type case 130 to contact the lower bonding portion 133. Thus, the extension part 152 is coupled to the tube-type case 130, such as by thermal bonding.

The label 160 is attached to an outer or external surface of the tube-type case 130 to realize an outer design of the battery pack 100.

The battery pack 100 according to an embodiment may include the tube-type case 130 integrally formed in the tube shape to improve the coupling between the tube-type case 130 and other components. In addition, the bare cell 110 may be easily inserted and coupled to the tube-type case 130. Thus, the battery pack 100 according to an embodiment may have improved durability against an external impact, such as bending or twisting, to increase reliability and quality. In addition, the battery pack 100 may have improved work efficiency in a manufacturing process for coupling the bare cell 110 to the tube-type case 130, and may reduce the number of manufacturing processes to improve manufacturing yield.

Also, in the battery pack 100 according to an embodiment, the tube-type case 130 may be formed of an insulating material to reduce the weight of the battery pack 100. Thus, the battery pack 100 according to an embodiment may realize lightweight batteries required for industrial and consumer applications.

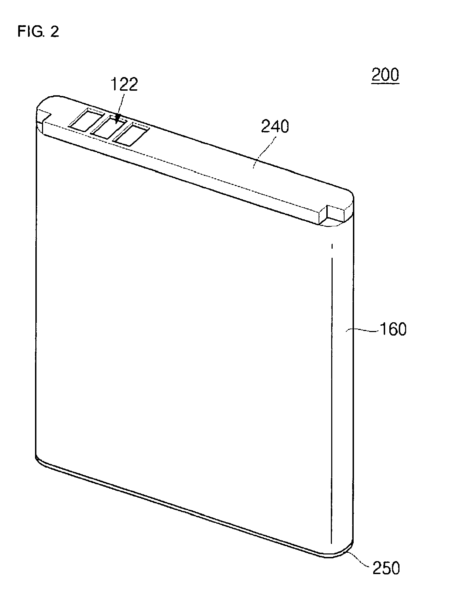

A battery pack 200 according to another embodiment will be described below with reference to FIGS. 1B and 2. The battery pack 200 has the same configuration and operation as the battery pack 100 of FIG. 1A, except that a top cover 240 and a bottom cover 250 are formed by an insert injection molding process. Thus, only the top cover 240 and the bottom cover 250 will be described in association with the battery pack 200 according to another embodiment.

FIG. 2 illustrates a perspective view of the battery pack 200. Referring to FIG. 2, the top cover 240 has the same outer configuration and operation as the top cover 140 of FIG. 1A. However, the top cover 240 is formed by an insert injection molding process in which a resin is molded in an upper bonding portion 132 of the tube-type case 130, and the label 160 is wrapped around the combined cover 240 and the tube-type case 130. Specifically, the bare cell 110 to which the circuit module 120 is coupled is inserted into the tube-type case 130, and then the top cover 240 is formed in the upper bonding portion 132 of the tube-type case 130 by injection molding. Thus, since the resin fills spaces between the bare cell 110, the circuit module 120, and the tube-type case 130 through the insert injection molding process to form the top cover 240, coupling between the upper portion of the bare cell 110, the circuit module 120, and the tube-type case 130 may be strengthened.

Here, the top cover 240 may be formed of a resin having excellent adhesive properties (such as a polyamide-based resin) to improve the coupling between the upper portion of the bare cell 110, the circuit module 120, and the tube-type case 130.

The bottom cover 250 shown in FIG. 2 has the same outer configuration and operation as the bottom cover 150 of FIG. 1A. However, the bottom cover 250 is formed by an insert injection molding process, similar to as described above with respect to the insert injection molding of the top cover 240, in which a resin is molded in the lower bonding portion 133 of the tube-type case 130. The bottom cover 250 may be formed of a resin having excellent adhesion (such as a polyamide-based resin) to improve coupling between the lower bonding portion 133 of the bare cell 110 and the tube-type case 130.

As described above, in the battery pack 200 according to another embodiment, since the insert injection molding process is performed to form the top cover 240 and the bottom cover 250, the coupling between the components may be further improved. Thus, the battery pack 200 according to another embodiment may have further improved durability against an external impact, such as bending or twisting, to further increase reliability and quality. Further, the tube-type case 130 allows for the top cover 240 and the bottom cover 250 to be insert injection molded while the bare cell 110 is disposed in the tube-type case 130. However, while being described as both being injection molded onto the tube-type case 130, it is understood that one cover can be formed prior and later connected while the other cover is directly formed on the tube-type case 130 by insert injection molding.

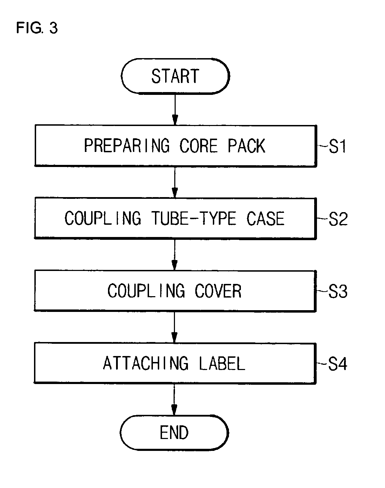

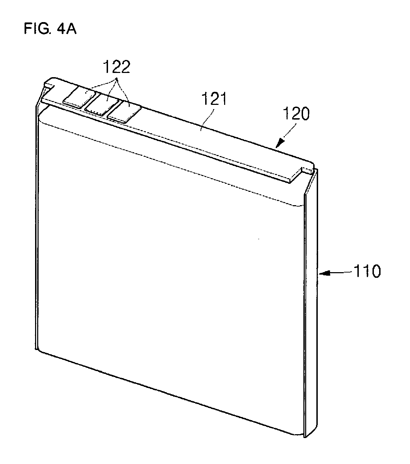

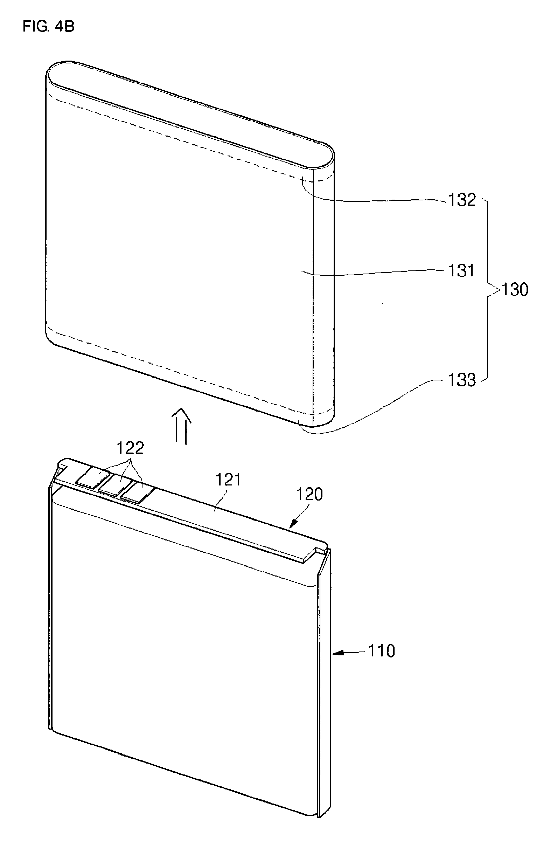

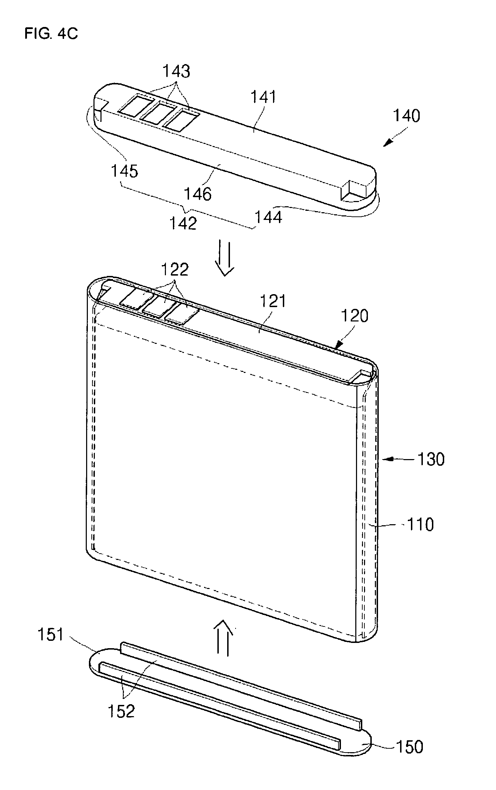

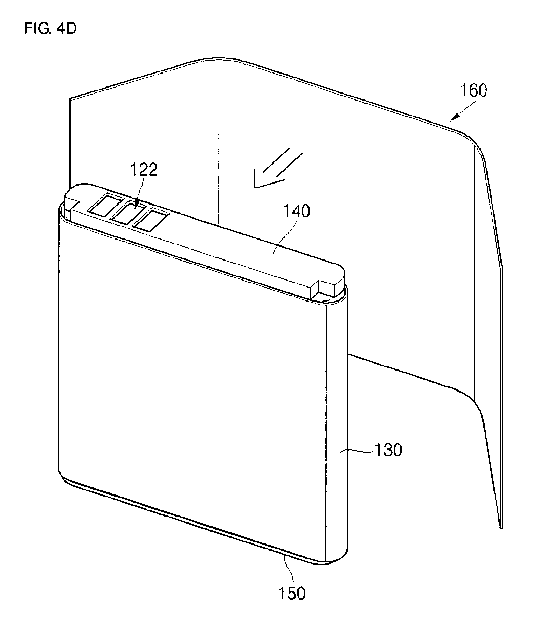

A method of manufacturing a battery pack 100 according to an embodiment will be described below. FIG. 3 illustrates a flowchart of a manufacturing process of a battery pack according to an embodiment. FIG. 4A illustrates a perspective view of a preparation process of a bare cell 110 of FIG. 3, and FIG. 4B illustrates a perspective view of a coupling process of a tube-type case 130 of FIG. 3. FIG. 4C illustrates a perspective view of a coupling process of a cover 140, 150 of FIG. 3, and FIG.4D illustrates a perspective view of an attachment process of a label 160 of FIG. 3.

Referring to FIG. 3, a method of manufacturing a battery pack 100 according to an embodiment includes a core pack preparation process S1, a tube-type case coupling process S2, a cover coupling process S3, and a label attachment process S4. Although FIG. 3 illustrates the processes occurring in a specific order, aspects of the present invention are not limited thereto such that the processes described may occur in different orders.

Referring to FIG. 4A, the core pack preparation process S1 is a process in which a core pack is prepared. Here, a pouch-type bare cell will be described as the bare cell 110. In the core pack preparation process S1, a circuit module 120 is prepared and electrically connected to the bare cell 110, such as by welding resulting in the formation of a core pack including the bare cell 110 and the circuit module 120. Although not shown, the circuit module 120 may be electrically connected to the bare cell 110 by welding after the bare cell 110 is disposed in the tube-type case 130. As a result, the core pack may be formed in the tube-type case coupling process S2.

Referring to FIG. 4B, the tube-type case coupling process S2 is a process in which the bare cell 110 is inserted into or disposed in a tube-type case 130. Specifically, in the tube-type case coupling process S2, the bare cell 110 and the circuit module 120 are inserted into the tube-type case 130 and covered by the tube-type case 130. Although not shown, when the core pack is formed in the tube-type case coupling process S2, electrode tabs 112 and 113 of the bare cell 110 are electrically connected to the connection terminals 123 and 124 by welding to form the core pack while at least a portion of the bare cell 110 is disposed in the tube-type case 130. Also, in the tube-type case coupling process S2, the bare cell 110 may be completely inserted into the tube-type case 130 so that the upper bonding portion 132 and the lower bonding portion 133 of the tube-type case 130 extend beyond the top surface 110a and the bottom surface 110f, respectively.

Referring to FIG. 4C, the cover coupling process S3 is a process for coupling a top cover 140 to the tube-type case 130 to cover the circuit module 120 electrically connected to the bare cell 110 and coupling a bottom cover 150 to the tube-type case 130 to cover the bottom surface 110f of the bare cell 110, disposed at an opposite side of the bare cell 110 from the top cover 140.

Specifically, in the cover coupling process S3, the top cover 140 and the bottom cover 150, which may be separately formed, are prepared. Then, a lower portion of the sidewall 142 of the top cover 140 is inserted into the upper bonding portion 132 of the tube-type case 130 and then thermal bonding is performed, and an extension part 152 of the bottom cover 150 is inserted into a lower portion of the tube-type case 130 and then thermal bonding is performed. Aspects of the present invention are not limited thereto such that the top cover 140 and the bottom cover 150 may be simultaneously disposed in respective ends of the tube-type case 130 and then heat treatment may be performed once or multiple times. In the cover coupling process S3, a bond or resin may fill spaces between the tube-type case 130, the bare cell 110, the top cover 140, and the bottom cover 150 to improve coupling between components. Further, the top cover 140 and the bottom cover 150 may be formed by insert injection molding in which the bare cell 110 and the circuit module 120 are disposed, either preformed as a core pack or formed inside the tube-type case 130, in the tube-type case 130, then resin is disposed in the upper bonding portion 132 and the lower bonding portion 133 so as to form the top cover 140 and the bottom cover 150, respectively.

Referring to FIG. 4D, the label attachment process S4 is a process for attaching a label 160 about a lateral part of the bare cell 110, i.e., the tube-type case 130, to complete the battery pack 100. While shown, it is understood that the label attachment process S4 need not be performed when no label 160 is used.

A method of manufacturing a battery pack 200 according to another embodiment will be described below. The method of manufacturing the battery pack 200 according to another embodiment has the generally same process as that of manufacturing the battery pack 100 of FIG. 3 except a cover coupling process S13. Thus, only the cover coupling process S13 will be described in the method of manufacturing the battery pack 200 according to another embodiment.

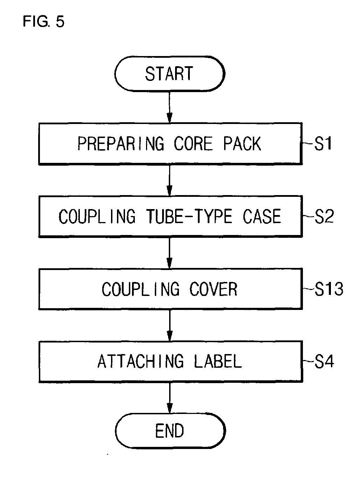

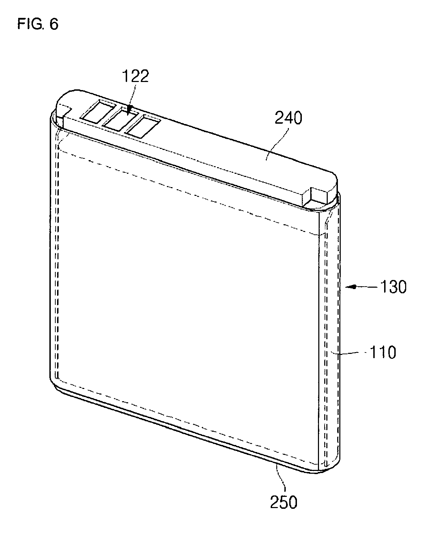

FIG. 5 illustrates a flowchart of a manufacturing process of a battery pack according to another embodiment, and FIG. 6 illustrates a perspective view of a coupling process of a cover 240, 250 of FIG. 5. Referring to FIG. 5, a method of manufacturing a battery pack 200 according to another embodiment may include a core pack preparation process S1, a tube-type case coupling process S2, a cover coupling process S13, and a label attachment process S4.

Referring to FIG. 6, like the cover coupling process S3 in FIG. 3, the cover coupling process S13 is a process for coupling a top cover 240 to a tube-type case 130 to cover a circuit module 120 electrically connected to a bare cell 110 and coupling a bottom cover 250 to the tube-type case 130 to cover the bottom surface 110f of the bare cell 110.

However, in the cover coupling process S13, a resin is disposed in an upper bonding portion 132 of the tube-type case 130, which molds the resin to surround the circuit module 120, thereby forming a top cover 240, and a resin is disposed in a lower bonding portion 133 of the tube-type case 130, which molds the resin to cover the bottom surface 110f the bare cell 110, thereby forming a bottom cover 250. Here, a polyamide-based resin having excellent adhesion may be used as the resin.

Exemplary embodiments have been disclosed herein, and although specific terms are employed, they are used and are to be interpreted in a generic and descriptive sense only and not for purpose of limitation.

## Claims

1. A battery pack (100), comprising:
a bare cell (110) having an elongated shape with a top surface (110a), side surfaces (110b...110e) and a bottom surface (110f); and
a tube-type case (130) being integrally formed and surrounding the side surfaces (110b...110e) of the bare cell (110), wherein the tube-type case (130) comprises an upper bonding portion (132) extending from a body part (131) of the tube-type case (130) and the battery pack (100) further includes a circuit module (120) disposed on the top surface (110a) of the bare cell (110) and a top cover (140) for receiving the circuit module (120) in an inner space thereof, wherein the top cover (140) is formed to at least in parts couple with the upper bonding portion (132) of the tube-type case (130),
**characterized in that** the upper bonding portion (132) includes a bonding film (134) disposed on a surface contacting the top cover (140).

2. The battery pack of claim 1, wherein the tube-type case (130) is made of a heat-shrinkable and/or an insulation material.

3. The battery pack of claim 2, wherein the tube-type case (130) is formed of at least one polymer selected from the group consisting of polycarbonate (PC), polypropylene (PP), polyethylene (PE) and polyethylene terephthalate (PET).

4. The battery pack of any of the preceding claims, wherein the tube-type case (130) comprises a lower bonding portion (133) extending from the body part (131) of the tube-type case (130) and the battery pack (100) further includes a bottom cover (150) disposed beneath the bottom surface (110f) of the bare cell (110) and formed to at least in parts couple with the lower bonding portion (133) of the tube-type case (130).

5. The battery pack of claim 4, wherein the lower bonding portion (133) includes a bonding film (134) disposed on a surface contacting the bottom cover (150).

6. The battery pack of any of claims 1, 4 or 5, wherein the top cover (140) and/or the bottom cover (150) is made of a polyamide based resin.

7. The battery pack of any of the preceding claims, wherein the tube-type case (130) includes a bonding film disposed on a surface contacting the bare cell (110).

8. The battery pack of any of the preceding claims, wherein the bare cell (110) is a pouch-type bare cell.

9. The battery pack of any of claims 1, 4 through 8, wherein a bond or resin is filled in spaces between the tube-type case (130), the bare cell (110), the top cover (140) and/or the bottom cover (150).

## Patentansprüche

1. Batteriepack (100), umfassend:
eine Rohzelle (110) länglicher Form mit einer oberen Fläche (110a), Seitenflächen (110b...110e) und einer unteren Fläche (110f); und
ein rohrartiges Gehäuse (130), das einstückig ausgebildet ist und die Seitenflächen (110b...110e) der Rohzelle (110) umgibt, wobei das rohrartige Gehäuse (130) einen oberen Verbindungsabschnitt (132) aufweist, der sich von einem Körperteil (131) des rohrartigen Gehäuses (130) erstreckt, und der Batteriepack (100) ferner ein auf der oberen Fläche (110a) der Rohzelle (110) angeordnetes Schaltungsmodul (120) sowie eine obere Abdeckung (140) zur Aufnahme des Schaltungsmoduls (120) in einem Innenraum derselben umfasst, wobei die obere Abdeckung (140) so ausgebildet ist, dass sie mindestens teilweise mit dem oberen Verbindungsabschnitt (132) des rohrartigen Gehäuses (130) in Verbindung steht,
**dadurch gekennzeichnet, dass**
der obere Verbindungsabschnitt (132) eine Verbindungsschicht (134) aufweist, die auf einer die obere Abdeckung (140) kontaktierenden Fläche aufgebracht ist.

2. Batteriepack nach Anspruch 1, wobei das rohrartige Gehäuse (130) aus einem aufschrumpfbaren und/oder Isoliermaterial besteht.

3. Batteriepack nach Anspruch 2, wobei das rohrartige Gehäuse (130) aus mindestens einem Polymer ausgewählt aus der Gruppe bestehend aus Polycarbonat (PC), Polypropylen (PP), Polyethylen (PE) und Polyethylen-Terephthalat (PET) gebildet ist.

4. Batteriepack nach einem der vorstehenden Ansprüche, wobei das rohrartige Gehäuse (130) einen unteren Verbindungsabschnitt (133) aufweist, der sich von dem Körperteil (131) des rohrartigen Gehäuses (130) erstreckt, und der Batteriepack ferner eine unterhalb der unteren Fläche (110f) der Rohzelle (110) angeordnete untere Abdeckung (150) umfasst, die so ausgebildet ist, dass sie mindestens teilweise mit dem unteren Verbindungsabschnitt (133) der rohrartigen Gehäuses (130) in Verbindung steht.

5. Batteriepack nach Anspruch 4, wobei der untere Verbindungsabschnitt (133) eine Verbindungsschicht (134) aufweist, die auf einer die untere Abdeckung (150) kontaktierenden Fläche aufgebracht ist.

6. Batteriepack nach einem der Ansprüche 1, 4 oder 5, wobei die obere Abdeckung (140) und/oder die untere Abdeckung (150) aus einem Harz basierend auf Polyamid bestehen.

7. Batteriepack nach einem der vorstehenden Ansprüche, wobei das rohrartige Gehäuse (130) eine Verbindungsschicht aufweist, die auf einer die Rohzelle (110) kontaktierenden Fläche aufgebracht ist.

8. Batteriepack nach einem der vorstehenden Ansprüche, wobei die Rohzelle (110) eine etuiartige Rohzelle ist.

9. Batteriepack nach einem der Ansprüche 1, 4 bis 8, wobei ein Bindemittel oder Harz in Zwischenräume zwischen dem rohrartigen Gehäuse (130), der Rohzelle (110), der oberen Abdeckung (140) und/oder der unteren Abdeckung gefüllt wird.

## Revendications

1. Ensemble de batterie (100), comprenant :
une cellule nue (110) ayant une forme allongée avec une surface supérieure (110a), des surfaces latérales (110b, ..., 110e) et une surface inférieure (110f) ; et
une enceinte du type tube (130) qui est formée d'un seul tenant et qui entoure les surfaces latérales (110b, ..., 110e) de la cellule nue (110), l'enceinte du type tube (130) comprenant une partie de fixation supérieure (132) s'étendant à partir d'une partie de corps (131) de l'enceinte du type tube (130) et l'ensemble de batterie (100) comprenant de plus un module de circuits (120) disposé sur la surface supérieure (110a) de la cellule nue (110) et un capot supérieur (140) pour recevoir le module de circuits (120) dans un espace intérieur de celui-ci, le capot supérieur (140) étant formé de façon à se coupler au moins partiellement à la partie de fixation supérieure (132) de l'enceinte du type tube (130),
**caractérisé en ce que** la partie de fixation supérieure (132) comprend un film de fixation (134) disposé sur une surface venant en contact avec le capot supérieur (140).

2. Ensemble de batterie selon la revendication 1, dans lequel l'enceinte du type tube (130) est réalisée en un matériau thermorétractable et/ou d'isolement.

3. Ensemble de batterie selon la revendication 2, dans lequel l'enceinte du type tube (130) est constituée par au moins un polymère choisi dans le groupe comprenant le polycarbonate (PC), le polypropylène (PP), le polyéthylène (PE) et le poly(téréphtalate d'éthylène) (PET).

4. Ensemble de batterie selon l'une quelconque des revendications précédentes, dans lequel l'enceinte du type tube (130) comprend une partie de fixation inférieure (133) s'étendant à partir de la partie de corps (131) de l'enceinte du type tube (130) et l'ensemble de batterie (100) comprend de plus un capot inférieur (150) disposé en dessous de la surface inférieure (110f) de la cellule nue (110) et formé de façon à se coupler au moins partiellement à la partie de fixation inférieure (133) de l'enceinte du type tube (130).

5. Ensemble de batterie selon la revendication 4, dans lequel la partie de fixation inférieure (133) comprend un film de fixation (134) disposé sur une surface venant en contact avec le capot inférieur (150).

6. Ensemble de batterie selon l'une quelconque des revendications 1, 4 ou 5, dans lequel le capot supérieur (140) et/ou le capot inférieur (150) est réalisé en une résine à base de polyamide.

7. Ensemble de batterie selon l'une quelconque des revendications précédentes, dans lequel l'enceinte du type tube (130) comprend un film de fixation disposé sur une surface venant en contact avec la cellule nue (110).

8. Ensemble de batterie selon l'une quelconque des revendications précédentes, dans lequel la cellule nue (110) est une cellule nue du type poche.

9. Ensemble de batterie selon l'une quelconque des revendications 1, 4 à 8, dans lequel un élément de liaison ou une résine remplit les espaces entre l'enceinte du type tube (130), la cellule nue (110), le capot supérieur (140) et/ou le capot inférieur (150).
